# EUROPEAN PATENT APPLICATION

(11) **EP 4 561 028 A1**
(43) Date of publication of application: **28.05.2025**
(21) Application number: 23843377.5
(22) Date of filing: 19.07.2023
(51) Int. Cl.: H04L 69/00, F17C 13/00, H04L 69/08, H04L 69/24, H04W 28/18, H04L 69/28

(54) **COMMUNICATION DEVICE AND METHOD HAVING INTEROPERABILITY FOR HYDROGEN VEHICLE FUELING**

(30) Priority: 19.07.2022 KR 20220088882; 19.07.2022 KR 20220088883; 28.09.2022 KR 20220123288
(71) Applicant: Hyundai Motor Company, Seoul 06797 (KR); Kia Corporation, Seoul 06797 (KR); Myongji University Industry and Academia Cooperation Foundation, Gyeonggi-do 17058 (KR)
(72) Inventor: PARK, Cheol Woo, Hwaseong-si, Gyeonggi-do 18280 (KR); SHIN, Min Ho, Yongin-si, Gyeonggi-do 17058 (KR); SHIN, Ye Eun, Hwaseong-si, Gyeonggi-do 18280 (KR); YOON, A Eun, Hwaseong-si, Gyeonggi-do 18280 (KR); KIM, Hyung Ki, Hwaseong-si, Gyeonggi-do 18280 (KR); KIM, Su Hyeong, Hwaseong-si, Gyeonggi-do 18280 (KR)
(74) Representative: Hoffmann Eitle
(86) International application number: PCT/KR2023/010424
(87) International publication number: WO 2024/019531

(57) **Abstract**

A communication method for hydrogen fueling, performed by a dispenser, comprises the steps of: identifying a communication protocol supported by a hydrogen fueled mobility and a communication protocol supported by a dispenser, based on a communication sequence performed by the hydrogen fueled mobility and information transferred by means of the communication sequence; and determining a communication protocol to be performed between the hydrogen fueled mobility and the dispenser, based on the communication protocol supported by the hydrogen fueled mobility and the communication protocol supported by the dispenser.

## Description

### TECHNICAL FIELD

The present disclosure relates to a communication technology for hydrogen fueling/supply for a hydrogen fueled mobility and, more specifically, to a hydrogen fueling process enhancing safety and compatibility, a communication protocol for the process, and a method for determining a hydrogen fueling protocol.

### BACKGROUND ART

The description in this section merely provides background information of embodiments of the present disclosure and is not intended to specify prior arts of the present disclosure.

A hydrogen vehicle, a hydrogen electric vehicle, or a fuel cell electric vehicle (FCEV) refers to a vehicle driven by electrical energy generated by a reaction of high-pressure hydrogen stored in the vehicle and oxygen in the air and producing little pollution.

The hydrogen fueled mobility is a concept including not only the hydrogen electric vehicle and the fuel cell electric vehicle employing a fuel cell system utilizing the hydrogen as an energy source but also another kind of mobilities employing an internal combustion engine (ICE) to generate power and being driven by the power generated by the ICE using the hydrogen as fuel.

As is known in the art, the hydrogen electric vehicle not only exhausts pure water (H2O) vapor in the course of generating the electricity but also removes ultrafine dusts in the air while being driven, and thus are attracting attention as a future eco-friendly mobility. Since the fuel, i.e. hydrogen, is abundant on earth and the energy production process is eco-friendly, the hydrogen electric vehicle is spotlighted as a technology with the potential to be utilized across industries.

The hydrogen electric vehicle produces electrical energy by supplying the high-pressure hydrogen stored safely in a hydrogen fuel storage tank and the oxygen introduced through an air supply system to a fuel cell stack and causing an electrochemical reaction between the hydrogen and the oxygen to occur. The electrical energy produced in the fuel cell stack is converted into kinetic energy through a motor to drive the hydrogen electric vehicle, and an operating hydrogen electric vehicle discharges only the pure water vapor through an exhaust port.

The fuel cell system provides power to the vehicle similarly to an engine in an internal combustion engine vehicle. A fuel cell, which is also referred to as a "tertiary battery," is a unit generating the electrical energy needed to drive the hydrogen electric vehicle. The fuel cell converts the chemical energy into the electrical energy through electrochemical reactions between the hydrogen and the oxygen. The electrical energy produced by the reactions originates from pure chemical reactions and does not produce any exhaust gases such as carbon dioxide unlike fossil fuels. Fuel cells are often categorized by the type of the fuel or an electrolyte. Leading fuel cell technologies may include a proton exchange membrane fuel cell (PEMFC), a solid oxide fuel cell (SOFC), and a molten carbonate fuel cell (MCFC). The components producing the electrical power using the fuel cells in the hydrogen electric vehicle includes the fuel cell stack, a hydrogen supply system, and an air supply system, and a thermal management system.

An efficient generation of the electrical energy in the fuel cell stack requires an assistance of the operation mechanism. Among several apparatuses in the operation mechanism, the hydrogen supply system plays a role of changing a pressure condition of the hydrogen safely stored in the hydrogen fuel storage tank from a high pressure to a low pressure and transfer to the fuel cell stack. In addition, the hydrogen supply system may increase a hydrogen supply efficiency by recirculating through a recirculation line.

A thermal management system may release heat generated while the fuel cell stack undergoes an electrochemical reaction to the outside and circulate cooling water to maintain a temperature of the fuel cell stack within a certain range. Thermal management system may affect the output and lifespan of the fuel cell stack.

A hydrogen fueled car other than the hydrogen electric vehicle is also a vehicle that uses the hydrogen as the fuel. The hydrogen fueled car is driven by an electric motor which is rotated by heat generated by directly burning the hydrogen in the engine. The method of fueling/supplying the hydrogen for the hydrogen fueled car is not much different from the hydrogen fueling/supply method for the hydrogen electric vehicle.

The control scheme for fueling or supply hydrogen to the hydrogen fueled mobility aims to control the hydrogen fueling/supply such that a temperature (T) and pressure (P) of a compressed hydrogen storage system (CHSS) on the fuel cell side are maintained below a certain temperature limit and a pressure limit to ensure the safety.

The hydrogen fueling/supply process, the control scheme, and the protocol thereof in the conventional hydrogen fueled mobility had been stipulated before wired/wireless communications or computing techniques for the control became mature, and thus do not utilize the state-of-art information and communications technologies (ICT) to their full extent.

Therefore, the conventional hydrogen fueling/supply subsystem for the hydrogen fueled mobility is inefficient, slow, and is not suitable for large-scale hydrogen fueling.

### DISCLOSURE OF INVENTION

### TECHNICAL PROBLEM

To solve the above problems, one object of the present disclosure is to enhance the safety and improve handling of emergency events and errors efficiently.

Another object of the present disclosure is to secure compatibility and bidirectional communication capability of communication protocols and enhance safety and efficiency of a hydrogen fueling/delivery process.

Another object of the present disclosure is to provide a safe and efficient hydrogen fueling/delivery process that enables fueling status monitoring, safety measurement/control through a cooperation, communication security, and user experience, and a communication protocol supporting the process.

Another object of the present disclosure is to provide a framework for providing a communication interoperability between a hydrogen fueled mobility and a dispenser, and for dividing a problem existing in an overall hydrogen fueling process for the hydrogen fueled mobility into a plurality of sub-problems to resolve the problem by dividing and conquering the problem.

### TECHNICAL SOLUTION

According to an aspect of an exemplary embodiment, a hydrogen fueling communication method performed by a dispenser supplying hydrogen fluid fuel to a hydrogen fueled mobility, may include: identifying a communication protocol supported by the hydrogen fueled mobility and a communication protocol supported by the dispenser based on a communication sequence performed by the hydrogen fueled mobility and information delivered by the communication sequence; and determining a communication protocol to be performed between the hydrogen fueled mobility and the dispenser based on the communication protocol supported by the hydrogen fueled mobility and the communication protocol supported by the dispenser.

The information delivered by the communication sequence may include use classification of communicated data (UCDC) that may be supported by the hydrogen fueled mobility.

The communication protocol may include at least one detailed subordinate communication protocol. The at least one detailed subordinate communication protocol may correspond to one of: bidirectional communication, unidirectional communication, and no communication.

The information delivered by the communication sequence may include at least one of: at least one communication protocol that the hydrogen fueled mobility can support and/or at least one hydrogen fueling protocol for supplying the hydrogen fluid fuel to the hydrogen fueled mobility that the hydrogen fueled mobility can support.

The operation of determining the communication protocol may include: determining a communication protocol candidate based on the communication protocol supported by the hydrogen fueled mobility and the communication protocol supported by the dispenser; and determining the communication protocol from the communication protocol candidate based on whether the communication protocol candidate corresponds to the hydrogen fueling protocol for supplying the hydrogen fluid fuel to the hydrogen fueled mobility.

The communication protocol may be determined based on at least one of: an interoperability between the dispenser and the hydrogen fueled mobility and/or a backward compatibility.

The hydrogen fueling communication method may further include: determining whether a receptacle of the hydrogen fueled mobility and a nozzle of the dispenser is coupled; and receiving the information delivered by the communication sequence from the hydrogen fueled mobility in a state where the receptacle and the nozzle is coupled.

The hydrogen fueling communication method may further include: performing a pairing by identifying whether a hydrogen fueled mobility indicated by the information delivered by the communication sequence is a same entity as a hydrogen fueled mobility coupled to the dispenser.

The hydrogen fueling communication method may further include: determining whether a receptacle of the hydrogen fueled mobility and a nozzle of the dispenser is coupled; standing by to receive the communication sequence from the hydrogen fueled mobility for a predetermined time interval in a state where the receptacle and the nozzle is coupled; and identifying a communication protocol that the hydrogen fueled mobility can support based on whether the communication sequence from the hydrogen fueled mobility is received within the predetermined time interval.

The operation of determining the communication protocol may include: initiating a communication protocol negotiation based on a determination that a bidirectional communication is supported between the hydrogen fueled mobility and the dispenser based on the information delivered by the communication sequence; and determining the communication protocol through the communication protocol negotiation.

According to another aspect of an exemplary embodiment, a hydrogen fueling communication apparatus mounted on a dispenser supplying hydrogen fluid fuel to a hydrogen fueled mobility, may include: a memory storing at least one program instruction; and a processor configured to execute the at least one program instruction stored in the memory. The processor, by executing the at least one program instruction stored in the memory, may be configured to: identify a communication protocol supported by the hydrogen fueled mobility and a communication protocol supported by the dispenser based on a communication sequence performed by the hydrogen fueled mobility and information delivered by the communication sequence; and determine a communication protocol to be performed between the hydrogen fueled mobility and the dispenser based on the communication protocol supported by the hydrogen fueled mobility and the communication protocol supported by the dispenser.

The processor, for determining the communication protocol, may be further configured to: determine a communication protocol candidate based on the communication protocol supported by the hydrogen fueled mobility and the communication protocol supported by the dispenser; and determine the communication protocol from the communication protocol candidate based on whether the communication protocol candidate corresponds to the hydrogen fueling protocol for supplying the hydrogen fluid fuel to the hydrogen fueled mobility.

The processor may be further configured to determine the communication protocol based on at least one of: an interoperability between the dispenser and the hydrogen fueled mobility and/or a backward compatibility.

The processor, by executing the at least one program instruction stored in the memory, may be further configured to: determine whether a receptacle of the hydrogen fueled mobility and a nozzle of the dispenser is coupled; and receive the information delivered by the communication sequence from the hydrogen fueled mobility in a state where the receptacle and the nozzle is coupled.

The processor, by executing the at least one program instruction stored in the memory, may be further configured to: perform a pairing by identifying whether a hydrogen fueled mobility indicated by the information delivered by the communication sequence is a same entity as a hydrogen fueled mobility coupled to the dispenser.

The processor, by executing the at least one program instruction stored in the memory, may be further configured to: determine whether a receptacle of the hydrogen fueled mobility and a nozzle of the dispenser is coupled; stand by to receive the communication sequence from the hydrogen fueled mobility for a predetermined time interval in a state where the receptacle and the nozzle is coupled; and identify a communication protocol that the hydrogen fueled mobility can support based on whether the communication sequence from the hydrogen fueled mobility is received within the predetermined time interval.

The processor, by executing the at least one program instruction stored in the memory, for determining the communication protocol, may be further configured to: initiate a communication protocol negotiation based on a determination that a bidirectional communication is supported between the hydrogen fueled mobility and the dispenser based on the information delivered by the communication sequence; and determine the communication protocol through the communication protocol negotiation.

### ADVANTAGEOUS EFFECTS

According to an exemplary embodiment of the present disclosure, it is possible to enhance the safety and improve handling of emergency events and errors efficiently.

According to an exemplary embodiment of the present disclosure, it is possible to secure compatibility and bidirectional communication capability of communication protocols and enhance safety and efficiency of a hydrogen fueling/delivery process.

According to an exemplary embodiment of the present disclosure, it is possible to provide a safe and efficient hydrogen fueling/delivery process that enables fueling status monitoring, safety measurement/control through a cooperation, communication security, and user experience, and a communication protocol supporting the process.

According to an exemplary embodiment of the present disclosure, it is possible to provide a framework for providing a communication interoperability between a hydrogen fueled mobility and a dispenser, and for dividing a problem existing in an overall hydrogen fueling process for the hydrogen fueled mobility into a plurality of sub-problems to resolve the problem by dividing and conquering the problem.

### DESCRIPTION OF DRAWINGS

FIG. 1 is a conceptual diagram illustrating a hydrogen electric vehicle and a dispenser 100 in which a hydrogen fueling communication method according to an exemplary embodiment of the present disclosure may be performed;
FIG. 2 is a flowchart illustrating the hydrogen fueling communication method according to an exemplary embodiment of the present disclosure;
FIGS. 3 and 4 are conceptual diagrams illustrating subordinate operations carried out while performing the hydrogen fueling communication method according to exemplary embodiments of the present disclosure;
FIG. 5 is a conceptual diagram describing an example of interoperability determination criteria which forms a basis of the hydrogen fueling communication method according to an exemplary embodiment of the present disclosure;
FIG. 6 is a conceptual diagram describing an example of interoperability determination criteria which forms a basis of the hydrogen fueling communication method according to an exemplary embodiment of the present disclosure;
FIG. 7 is a conceptual diagram describing an example of interoperability determination criteria which forms a basis of the hydrogen fueling communication method according to an exemplary embodiment of the present disclosure;
FIGS. 8 and 9 are sequence diagrams illustrating a communication protocol negotiation process carried out while performing the hydrogen fueling communication method according to exemplary embodiments of the present disclosure;
FIG. 10 is a sequence diagram illustrating an authorization process carried out while performing the hydrogen fueling communication method according to an exemplary embodiment of the present disclosure;
FIG. 11 is a sequence diagram illustrating a safety check-in process carried out while performing the hydrogen fueling communication method according to an exemplary embodiment of the present disclosure;
FIG. 12 is a sequence diagram illustrating a fueling control and monitoring process carried out while performing the hydrogen fueling communication method according to an exemplary embodiment of the present disclosure;
FIG. 13 is a sequence diagram illustrating a safety check-out process carried out while performing the hydrogen fueling communication method according to an exemplary embodiment of the present disclosure;
FIG. 14 is a sequence diagram illustrating a termination process carried out while performing the hydrogen fueling communication method according to an exemplary embodiment of the present disclosure;
FIG. 15 is a sequence diagram illustrating an emergency handling process carried out while performing the hydrogen fueling communication method according to an exemplary embodiment of the present disclosure; and
FIG. 16 is a block diagram illustrating a generalized configuration of a computing system that may be mounted on a dispenser and/or a hydrogen electric vehicle as a hydrogen fueling communication apparatus according to an exemplary embodiment of the present disclosure.

### BEST MODE

In addition to the above objects, another objects and features of the present disclosure will become more apparent through the description of exemplary embodiments with reference to the accompanying drawings.

For a clearer understanding of the features and advantages of the present disclosure, exemplary embodiments of the present disclosure will be described in detail with reference to the accompanied drawings. However, it should be understood that the present disclosure is not limited to particular embodiments disclosed herein but includes all modifications, equivalents, and alternatives falling within the spirit and scope of the present disclosure.

The terminologies including ordinals such as "first" and "second" designated for explaining various components in this specification are used to discriminate a component from the other ones but are not intended to be limiting to a specific component. For example, a second component may be referred to as a first component and, similarly, a first component may also be referred to as a second component without departing from the scope of the present disclosure. As used herein, the term "and/or" may include a presence of one or more of the associated listed items and any and all combinations of the listed items.

In the description of exemplary embodiments of the present disclosure, "at least one of A and B" may mean "at least one of A or B" or "at least one of combinations of one or more of A and B". In addition, in the description of exemplary embodiments of the present disclosure, "one or more of A and B" may mean "one or more of A or B" or "one or more of combinations of one or more of A and B".

When a component is referred to as being "connected" or "coupled" to another component, the component may be directly connected or coupled logically or physically to the other component or indirectly through an object therebetween. Contrarily, when a component is referred to as being "directly connected" or "directly coupled" to another component, it is to be understood that there is no intervening object between the components. Other words used to describe the relationship between elements should be interpreted in a similar fashion.

The terminologies are used herein for the purpose of describing particular exemplary embodiments only and are not intended to limit the present disclosure. The singular forms include plural referents as well unless the context clearly dictates otherwise. Also, the expressions "comprises," "includes," "constructed," "configured" are used to refer a presence of a combination of stated features, numbers, processing steps, operations, elements, or components, but are not intended to preclude a presence or addition of another feature, number, processing step, operation, element, or component.

Unless defined otherwise, all terms used herein, including technical or scientific terms, have the same meaning as commonly understood by those of ordinary skill in the art to which the present disclosure pertains. Terms such as those defined in a commonly used dictionary should be interpreted as having meanings consistent with their meanings in the context of related literatures and will not be interpreted as having ideal or excessively formal meanings unless explicitly defined in the present application.

Meanwhile, one or more conventional components may be included in a configuration of the present disclosure if necessary, and such components will be described herein to an extent that it does not obscure the technical idea and concept of the present disclosure. If the description of the conventional components may obscure the technical idea and concept of the present disclosure, however, detailed description of such components may be omitted for simplicity.

For example, the communications between a dispenser and a vehicle may be implemented using conventional technologies, e.g., IrDA technology for a unidirectional communication, short-range wireless communication technology such as Bluetooth, WLAN, and UWB for a bidirectional communication, and wired communication technology for the unidirectional or bidirectional communication. At least some of the conventional technologies may be applied as a base technology for implementing the present disclosure.

However, the present disclosure is not intended to claim rights to these known technologies, and some of the conventional technologies may be included in the description of exemplary embodiments to enable to those skilled in the art to implement the exemplary embodiments without deviating from a scope of a technical concept of the exemplary embodiments.

Terms used in the present disclosure are defined as follows.

"Interoperability": A state in which components of a system interwork with corresponding components of the system to perform operations aimed by the system. Additionally, information interoperability may refer to capability that two or more networks, systems, devices, applications, or components may efficiently share and easily use information without causing inconvenience to users.

The correlation or association process may include a process of establishing a relationship between two peer communication entities.

"Command and control communications": Communications for exchanging information required for initiating, controlling, and terminating a hydrogen fueling process between a hydrogen dispenser and a hydrogen fueled mobility.

The Hydrogen fueled mobilities generally include not only the hydrogen electric vehicles or hydrogen fuel cell electric vehicles (FCEVs) using the fuel cells but also the internal combustion engine (ICE)-based vehicles using the hydrogen as fuel.

Even through the embodiments described in the following description focus on the hydrogen electric vehicles or the hydrogen fuel cell electric vehicles, it is obvious to those skilled in the art that the present disclosure is applicable to the ICE-based hydrogen fueled mobilities using the hydrogen as fuel according to another embodiments of the present disclosure. In particular, though a hydrogen fueling protocol and/or a communication protocol for the hydrogen fueling is disclosed with a focus on the hydrogen fuel cell electric vehicles in the following description, the hydrogen fueling protocol and/or the communication protocol for the hydrogen fueling may be applicable to the ICE-based hydrogen electric vehicles as well.

The hydrogen fluid fuel may include gaseous hydrogen fuel or liquid hydrogen fuel.

Exemplary embodiments of the present disclosure will now be described in detail with reference to the accompanying drawings. In the drawings, the same components may be designated by the same reference numerals to facilitate overall understanding of the disclosure, and duplicate descriptions thereof will be omitted for simplicity.

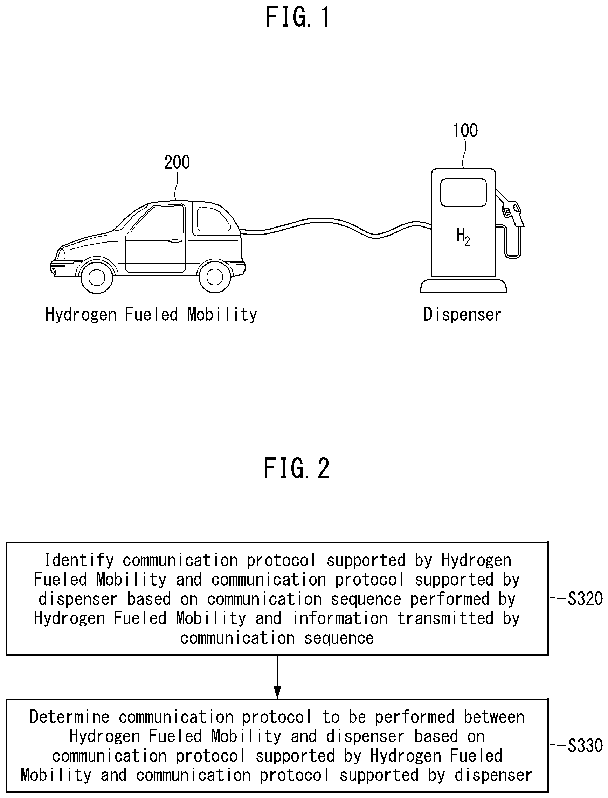

Hereinbelow, exemplary embodiments of the present disclosure are described in detail with reference to FIGS. 1-16.

FIG. 1 is a conceptual diagram illustrating a hydrogen electric vehicle or FCEV 200 and a dispenser 100 in which a hydrogen fueling communication method according to an exemplary embodiment of the present disclosure may be performed.

A hydrogen fueling process between the hydrogen electric vehicle 200 and the dispenser 100 may be understood as a process in which the dispenser 100 controls pressure and temperature of the gaseous hydrogen fuel or the liquid hydrogen fuel to supply the gaseous hydrogen fuel or the liquid hydrogen fuel to the hydrogen electric vehicle 200.

SAE J2601 industrial standard published in May 2020 specifies fueling protocols for light duty gaseous hydrogen surface vehicles. In particular, the SAE J2601 standard specifies a unidirectional communication from the hydrogen electric vehicle 200 to the dispenser 100 for the light duty and medium duty vehicles.

A component of the hydrogen electric vehicle 200 that engages with a nozzle of the dispenser 100 is referred to as a receptacle. The SAE J2601 standard discloses that the hydrogen electric vehicle 200 may notify the dispenser 100, by using unidirectional communication means such as IrDA, that the nozzle is engaged with the receptacle.

There may be cases where the hydrogen electric vehicle 200 does not have even the unidirectional communication means. In such cases, the dispenser 100 may be required to control the hydrogen fueling process for the hydrogen electric vehicle 200 without any communication process.

With advancements of the communication technology, a possibility of the bidirectional communication between the hydrogen electric vehicle 200 and the dispenser 100 that may be implemented using conventional wired or wireless communication means has been proposed. At this time, it may be necessary for the hydrogen electric vehicle 200 and the dispenser 100 to agree on the level of data to be exchanged between the hydrogen electric vehicle 200 and the dispenser 100.

The bidirectional communication may facilitate an accurate measurement of a quantity of supplied fuel when the hydrogen fuel is supplied, and enable to secure safety and reliability of the fueling process and efficiently perform safety control and management including a pause and resumption of the fueling process due to unexpected variables.

There may be instances, however, where the hydrogen electric vehicle 200 and the dispenser 100 are required to perform the fueling process without the information sharing in advance. Therefore, it may be crucial, before performing the fueling process, to check compatible types of the communication protocol and the hydrogen fueling protocol between the hydrogen electric vehicle 200 and the dispenser 100 to ensure the compatibility and the interoperability.

According to an exemplary embodiment of the present disclosure, a use case framework for fueling communication of the hydrogen electric vehicle 200 is provided.

The framework according to an exemplary embodiment of the present disclosure allows to ensure the interoperability and the compatibility in almost all operations of the hydrogen electric vehicle 200 fueling process.

The hydrogen fueling communication method according to an exemplary embodiment of the present disclosure enables to divide a problem existing in an overall process into a plurality of sub-problems to resolve the problem by dividing and conquering the problem.

The hydrogen fueling communication method according to an exemplary embodiment of the present disclosure may identify individual use cases for solving each of the sub-problems.

FIG. 2 is a flowchart illustrating the hydrogen fueling communication method according to an exemplary embodiment of the present disclosure.

Referring to FIG. 2, the hydrogen fueling communication method, which is performed by the dispenser 100 supplying the hydrogen fluid fuel to the hydrogen electric vehicle or fuel cell electric vehicle (FCEV) 200 according to an exemplary embodiment of the present disclosure, may include an operation (S320) of identifying the communication protocol supported by the hydrogen electric vehicle 200 and the communication protocol supported by the dispenser 100 based on a communication sequence performed by the hydrogen electric vehicle 200 and information delivered by the communication sequence, and an operation (S330) of determining a communication protocol to be performed between the hydrogen electric vehicle 200 and the dispenser 100 based on the communication protocol supported by the hydrogen electric vehicle 200 and the communication protocol supported by the dispenser 100.

The information delivered by the communication sequence may include use classification of communicated data (UCDC) that the hydrogen electric vehicle 200 may support.

The communication protocol may include at least one detailed subordinate communication protocol. The at least one detailed subordinate communication protocol may correspond to one of: bidirectional communications, unidirectional communications, or no communication.

The information delivered by the communication sequence may include at least one of: at least one communication protocol that the hydrogen electric vehicle 200 can support and/or at least one hydrogen fueling protocol for supplying the hydrogen fluid fuel to the hydrogen electric vehicle 200, where the hydrogen electric vehicle 200 can support the at least one hydrogen fueling protocol.

The operation S330 of determining the communication protocol may include an operation of determining a communication protocol candidate based on the communication protocol supported by the hydrogen electric vehicle 200 and the communication protocol supported by the dispenser 100, and an operation of determining the communication protocol from the communication protocol candidate based on a determination on whether the communication protocol candidate corresponds to the hydrogen fueling protocol for supplying the hydrogen fluid fuel to the hydrogen electric vehicle 200.

Some fueling protocols may be performed on a basis of no communication. Unidirectional IrDA may be required for some of the other fueling protocols to be performed. Bidirectional communication may be required for some of the other fueling protocols to be performed. Both bidirectional communication and unidirectional IrDA may be required for some of the other fueling protocols to be performed.

A certain UCDC level or a higher UCDC level may be required for some fueling protocols to be performed. At least one fueling protocol may be prepared (or proposed) based on the type of the hydrogen electric vehicle 200 and the type of the dispenser 100. The prepared (or proposed) fueling protocol may be assigned a priority. In case that a plurality of fueling protocols are prepared or proposed, the fueling protocols may be assigned with different priorities. The communication protocol and the fueling protocol between the hydrogen electric vehicle 200 and the dispenser 100 may be finally determined based on whether the communication protocol required by the fueling protocol is supported by the hydrogen electric vehicle 200 and/or the dispenser 100 taking into account the priorities of the prepared fueling protocols. Whether the communication protocol required by the fueling protocol is supported by the hydrogen electric vehicle 200 and/or the dispenser 100 may be determined by the hydrogen electric vehicle 200, the dispenser 100, or both of the hydrogen electric vehicle 200 and the dispenser 100.

In the operation S330 of determining the communication protocol, the communication protocol may be determined based on at least one of: an interoperability between the dispenser 100 and the hydrogen electric vehicle 200 and/or a UCDC backward compatibility.

The hydrogen fueling communication method according to an exemplary embodiment of the present disclosure may further include an operation of detecting (sensing or checking) a coupling of the receptacle of the hydrogen electric vehicle 200 and the nozzle of the dispenser 100 (determining whether the receptacle and the nozzle is coupled); and an operation of receiving the information delivered by the communication sequence from the hydrogen electric vehicle 200 in a state where the coupling is detected (or, where the receptacle and the nozzle is coupled).

The hydrogen fueling communication method according to an exemplary embodiment of the present disclosure may further include a pairing operation performed by identifying whether the hydrogen electric vehicle 200 indicated by the information delivered by the communication sequence is the same entity as a hydrogen electric vehicle 200 coupled to the dispenser 100.

The hydrogen fueling communication method according to an exemplary embodiment of the present disclosure may further include an operation of detecting (sensing or checking) a coupling of the receptacle of the hydrogen electric vehicle 200 and the nozzle of the dispenser 100 (determining whether the receptacle and the nozzle is coupled); an operation of standing by to receive the communication sequence from the hydrogen electric vehicle 200 for a certain time interval in a state that the coupling is being detected (or, where the receptacle and the nozzle is coupled).; and an operation of identifying the communication protocol that the hydrogen electric vehicle 200 can support based on whether the communication sequence from the hydrogen electric vehicle 200 is received within the certain time interval. Whether the communication sequence from the hydrogen electric vehicle 200 is received within the certain time interval may be determined by the dispenser 100.

In case that the communication sequence from the hydrogen electric vehicle 200 is not detected or received within the certain time interval, the dispenser 100 may consider that the hydrogen electric vehicle 200 does not support the communication means and may proceed with the hydrogen fueling process on a premise of the no communication.

The hydrogen fueling communication method according to an exemplary embodiment of the present disclosure may further include an operation of determining a hydrogen fueling parameter based on a determined hydrogen fueling protocol. In this case, an operation of supplying the hydrogen fluid fuel may be performed based on the hydrogen fueling protocol and the hydrogen fueling parameters.

The operation S330 of determining the communication protocol may include an operation of initiating a communication protocol negotiation in case that it is determined that the bidirectional communication may be supported between the hydrogen electric vehicle 200 and the dispenser 100 based on the information delivered by the communication sequence; and an operation of determining the communication protocol through the communication protocol negotiation.

The operation of determining the hydrogen fueling protocol may include an operation of initiating a hydrogen fueling protocol negotiation between the hydrogen electric vehicle 200 and the dispenser 100, and an operation of determining the hydrogen fueling protocol through the hydrogen fueling protocol negotiation.

The hydrogen fueling communication method according to an exemplary embodiment of the present disclosure may further include an operation of initiating the hydrogen fueling parameter negotiation between the hydrogen electric vehicle 200 and the dispenser 100 based on the hydrogen fueling protocol; and an operation of determining the hydrogen fueling parameter through the hydrogen fueling parameter negotiation.

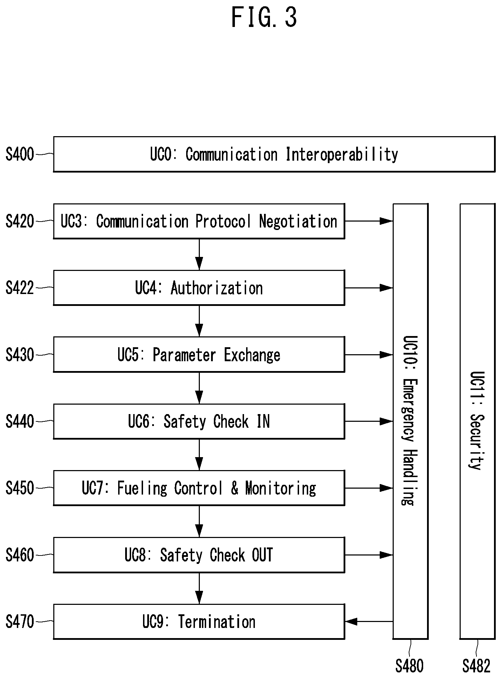

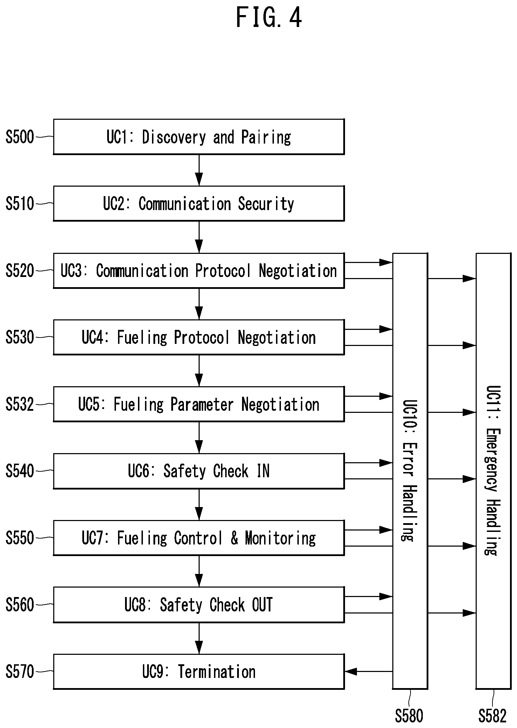

FIGS. 3 and 4 are conceptual diagrams illustrating sub-operations carried out while performing the hydrogen fueling communication method according to exemplary embodiments of the present disclosure.

FIG. 3 illustrates sub-operations S400-S482 of the hydrogen fueling communication method according to a first embodiment of the present disclosure.

In the embodiment of FIG. 3, a use case (UC0) of solving a communication interoperability (S400) may precede all the other sub-operations S420-S482.

FIG. 4 illustrates sub-operations S500-S582 of the hydrogen fueling communication method according to a second embodiment of the present disclosure.

In the embodiment of FIG. 4, a use case (UC1) of discovery and pairing operation (S500) may correspond to the use case (UC0) of solving the communication interoperability (S400) shown in FIG. 3.

Referring to FIGS. 3 and 4 together, the use case (UC0) of solving the communication interoperability S400 and the use case (UC1) of discovery and pairing operation S500 may correspond to include processes of checking, identification, judgment, verification, and/or selection to allow the interoperability among different implementations based on multiple technologies. For example, implementations based on different standards such as SAE standard and ISO standard may be considered. Further, it may be assumed that each of the implementations may be based on a communication type such as no communication, the unilateral IrDA communication, and/or other wired or wireless communication such as and an advanced communication (AC) technology. An example of the advanced communication technology may be a bidirectional communication technology and may include wired or wireless communication technology.

Similarly to the use case (UC0) of solving the communication interoperability S400 in the embodiment of FIG. 3, the use case (UC1) of discovery and pairing operation S500 precedes all the sub-operations in the embodiment of FIG. 4. In another embodiment of the present disclosure, however, the use case (UC0) of solving the communication interoperability S400 may be performed at any stage throughout all the sub-operations. That is, the use case (UC0) of solving the communication interoperability S400 may be performed at any stage when it is required to determine the communication interoperability and/or compatibility.

Use cases (UC3) of solving the communication interoperability operations S420 and S420 shown in FIGS. 3 and 4, respectively, may be a process of determining the communication protocol including a type and a version between devices supporting different sets of protocols. The UCDC level may also be a subject of a negotiation. When there are multiple protocols commonly supported by the devices, a preferred protocol may be selected.

A use case (UC4) of authorization operation S422 shown in FIG. 3 may be a process of allowing a user to be authorized for fueling without interrupting the communication. The dispenser 100 and the vehicle may wait for an arrival of an authorization result before initiating the fueling.

A use case (UC5) of parameter exchange operation S430 shown in FIG. 3 may correspond to a use case (UC4) of fueling protocol negotiation operation S530 and a use case (UC5) of fueling parameter negotiation operation S532 shown in FIG. 4. These processes S430. S530, and S532 may be processes of exchanging protocols and parameters necessary for safe and efficient fueling between the hydrogen electric vehicle 200 and the dispenser 100. For example, information such as physical limitations, fueling methods, and fueling goals may be exchanged and be subject to negotiation.

A use case (UC6) of safety check-in operation S440 and S540 shown in FIGS. 3 and 4, respectively, may be a process to ensure safe fueling before beginning the fueling procedure. An examples of the operation at this stage may include checking leakage.

A use case (UC7) of fueling control and monitoring operation S450 and S550 shown in FIGS. 3 and 4, respectively, may be a process to monitor and control the entire fueling procedure so that the fueling process is performed safely and efficiently.

A use case (UC8) of safety check-out operation S460 and S560 shown in FIGS. 3 and 4, respectively, may be a process to ensure the safety in the process of finishing the fueling and unplugging the nozzle from the receptacle. An example of the operation at this stage may include checking problems at the nozzle.

A use case (UC8) of termination operation S470 and S570 shown in FIGS. 3 and 4, respectively, may be a process of wrapping up the fueling process. An example of the operation at this stage may include exchanging fueling results. The fueling results may include a hydrogen delivery amount.

A use case (UC11) of security operation S482 shown in FIG. 3 and a use case (UC2) of communication security operation S510 shown in FIG. 4 may be processes of protecting the communication process and data to protect user privacy and ensure a safe and reliable fueling experience.

In case where the bidirectional communication is supported between the hydrogen electric vehicle 200 and the dispenser 100, the security process may proceed in an order of a bidirectional authentication, a key exchange, and a secure channel establishment. Messages may be exchanged while maintaining integrity, authenticity, and confidentiality so as to prevent an exposure to an external entity.

A use case (UC10) of emergency handling operation S480 shown in FIG. 3 and a use case (UC10) of error handling operation S580 and a use case (UC11) of emergency handling operation S582 shown in FIG. 4 may be processes of handling emergent events effectively to prevent any safety incidents. The emergent events may include various situations such as a situation that the dispenser 100 detects an instability in a temperature or pressure condition during the fueling and determines to pause or stop the fueling procedure and a situation that the hydrogen electric vehicle 200 urgently requests to stop the fueling procedure.

A use case (UC1) of discovery and pairing operation S500 shown in FIG. 4 may include an operation that, after the nozzle of the dispenser 100 is coupled to the receptacle of the hydrogen electric vehicle 200, the dispenser 100 and the hydrogen electric vehicle 200 detect and identify each other through communications.

For example, when a hydrogen electric vehicle 200 having an identifier 'V1' determines that an identifier of a dispenser 100 connected to the hydrogen electric vehicle 200 itself is 'DIS2' and transmits a message such as "Hello DIS2", the pairing process may be completed if the actual identifier of the dispenser 100 is 'DIS2' and the dispenser 100 responds to the hydrogen electric vehicle 200 by a message "Hello V1". When two dispensers 'DIS1' and 'DIS2' are located near the hydrogen electric vehicle 200 'V1', the hydrogen electric vehicle 200 'V1' may accurately identify the dispenser 100 to which it is physically connected to prepare for the hydrogen fueling.

The pairing process may be performed by exchanging information such as a pairing ID between the entities.

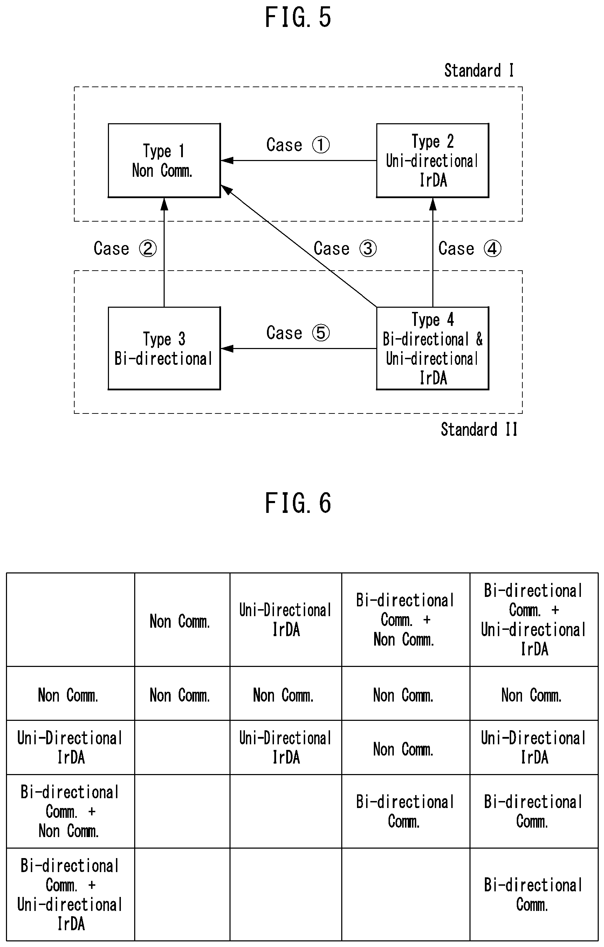

FIG. 5 is a conceptual diagram illustrating an example of interoperability determination criteria which forms a basis of the hydrogen fueling communication method according to an exemplary embodiment of the present disclosure.

Four examples of communication types are illustrated in FIG. 5.

Devices supporting a standard 1-based protocol may be compatible to each other.

Devices supporting a standard 2-based protocol may be compatible to each other. The standard 2-based protocol may be a protocol supporting the bidirectional communication.

One of the objects of the present disclosure is to secure a compatibility between a device supporting the standard 1-based protocol and a device supporting the standard 2-based protocol supporting the bidirectional communication.

To achieve the object, exemplary situations of four types which form bases for the interoperability determination criteria may be specified as follows in accordance with the communication types supported by the devices according to an exemplary embodiment of the present disclosure.

Type 1: No communication is supported. However, a no-communication method according to standard 1 may be implemented.

Type 2: Unidirectional IrDA communication is supported.

Type 3: Only advanced communication (AC) is supported.

Type 4: Both bidirectional advanced communication and unidirectional IrDA are supported.

A method of maximizing the interoperability among the four communication types is provided according to an exemplary embodiment of the present disclosure. For example, when a device of Type 4 supporting the AC and the IrDA meets a device of Type 2 supporting IrDA, the device of Type 4 will be able to recognize that the advanced communication (AC) is not available, and the communications between the devices may be limited to the unidirectional IrDA communication supported by the device of Type 2.

For example, when a device of Type 3 supporting the AC for UCDC2 meets a device of Type 3 supporting the AC for UCDC3/IrDA, no common protocol is identified to be commonly shared between the devices and thus only the no-communication method is available between the devices.

When a device of Type 4 supporting ACv1/IrDA meets a device of Type 4 supporting ACv2/IrDA, a mismatch in the versions of the advanced communication (AC) protocols occurs and thus the communication between the devices is limited to the unidirectional IrDA communication.

Referring back to FIG. 5, Case 1 through Case 3 illustrate scenarios where communications of respective devices are limited to the no-communication because of a capability of a counterpart device having the type of Type 1.

In Case 1, a device of Type 2 meets a device of Type 1, and the device of Type 2 may fall back to Type 1. Although not shown in the drawing, when a device of Type 2 meets a device of Type 3 in another embodiment of the present disclosure, both the devices may fall back to Type 1 similarly to the Case 1.

In Case 2, a device of Type 3 meets a device of Type 1, and the device of Type 3 may fall back to Type 1. When a device of Type 3 meets a device of Type 2, the device of Type 3 may also fall back to Type 1 similarly to the Case 2.

In Case 4, a device of Type 4 meets a device Type 2, and the device of Type 4 may fall back to Type 2 and communications of the device may be limited to the unidirectional IrDA communication.

In Case 5 where a device of Type 4 meets a device of Type 3, the advanced communication (AC) supported by both the devices may be adopted as a communication scheme. In this scenario, the unidirectional IrDA communication of the device of Type 4 may not be available.

The communication types may be assigned with priorities as follows. If the advanced communication (AC) is supported, the AC is assigned with a higher priority than the unidirectional IrDA. The unidirectional IrDA is assigned with a higher priority than the no communication. However, when a device of Type 2 and a device of Type 3 meet each other but no common communication protocol is found, both devices may fall back to Type 1.

When devices of Type 4 having a common communication protocol meet each other, the common communication protocol may be selected. However, if there exists no common communication protocol, the devices may fall back to Type 3 or Type 2.

When devices of Type 3 having a common communication protocol meet each other, the common communication protocol may be selected. However, if there exists no common communication protocol, the devices may fall back to Type 1.

In the physical layer for such fueling communications, a wired communication scheme such as serial communications, power line communications (e.g., ISO 15118 for conductive communication), and Ethernet (e.g., a new candidate for ISO 15118) may be used in addition to the unidirectional IrDA communication.

The advanced communication (AC) may be a wired or wireless bidirectional communication scheme, and the wireless communication scheme may include various communication schemes such as 5G, WLAN, BLE, ETH, UWB, RFID, and NFC. Known protocols such as TCP/IP may be used as the communication protocol for such communication schemes.

For example, the wireless communication scheme that may be considered may include Bluetooth, WLAN/Wi-Fi, UWB (IEC limited consideration for ACD), or NFC.

The wired communication scheme that may be considered in the AC may include the bidirectional IrDA, the serial communication, or automotive Ethernet.

In addition, a hybrid communication scheme can also be considered.

In a hybrid communication scheme in which the IrDA and the wired communication scheme is combined, hardware changes on the nozzle and receptacle sides may be required.

In a hybrid communication scheme in which the IrDA and the wireless communication scheme is combined, any hardware change may not be required on the nozzle and receptacle sides, but additional communication equipment may be required.

FIG. 6 is a table summarizing the interoperability determination criteria which forms the basis of the hydrogen fueling communication method according to an exemplary embodiment of the present disclosure.

In FIG. 6, the interoperability determination criteria of which examples are illustrated in FIG. 5 is summarized in a form of an interoperability matrix.

When the hydrogen electric vehicle 200 and the dispenser 100 recognize each other, if it is identified that the hydrogen electric vehicle 200 and the dispenser 100 have common or identical implementations, the common protocol may be applied for the communication between them. Such cases are represented by the main diagonal portion of the matrix.

When a no-communication device on one side meets a unidirectional IrDA communication device on the other side, the unidirectional IrDA communication device may fall back to the no-communication that is commonly covered by both devices.

If the devices on both sides support the bidirectional communication, the bidirectional communication may be applied regardless of whether the unidirectional IrDA is supported. However, the compatibility according to the UCDC level may be additionally considered.

When a bidirectional communication device on one side meets a no-communication device on the other side, the bidirectional communication device may fall back to the no-communication.

When a bidirectional communication device on one side meets a unidirectional IrDA device on the other side, it may be determined whether the unidirectional IrDA is to be selected or not depending on whether the bidirectional communication device can support the unidirectional IrDA communication.

If the bidirectional communication device does not support the unidirectional IrDA communication, both devices may fall back to the no-communication.

The determination of the interoperability shown in FIGS. 5 and 6 requires that a standard 2-based device supporting the bidirectional communication must support the standard 1-based fueling method regardless of whether the unidirectional IrDA communication is supported (Requirement 1).

A standard 2-based device supporting the bidirectional communication must be able to detect that a counterpart device supports the standard 2 (Requirement 2).

If the hydrogen electric vehicle 200 or the dispenser 100 does not support the standard 2, a standard 2-based device must fall back to a compatible standard 1-based method (Requirement 3).

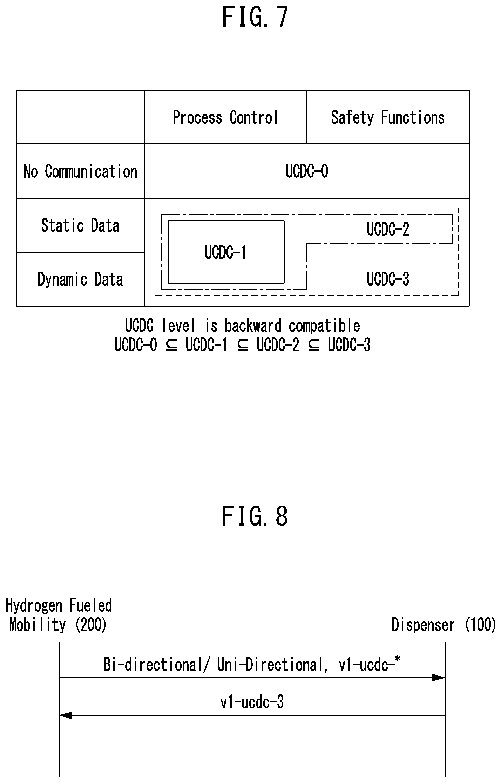

FIG. 7 is a conceptual diagram illustrating the interoperability determination criteria which forms the basis of the hydrogen fueling communication method according to an exemplary embodiment of the present disclosure.

In FIG. 7, communication and data exchange methods for a process control and a safety function are classified according to the UCDC level. It can be seen that the UCDC level is backward compatible. In another embodiment of the present disclosure, the backward compatibility may be effectively applicable to each of the no-communication, the unidirectional communication, the bidirectional communication, and a combination thereof regardless of the UCDC.

In case of UCDC-0, data is not communicated. Even if data is communicated, communicated data is not used for the fueling protocol or an associated safety function.

In case of UCDC-1, the communicated data is not used for the safety function. Static data communicated may be used to improve the performance of the fueling protocol. Dynamic data communicated may be used to reduce a risk against process deviations during the fueling protocol.

In case of UCDC-2, all data used in the UCDC-1 are available, and static data communicated may be used for the safety function.

In case of UCDC-3, all types of data including the static data and the dynamic data may be used for a dynamic control of the protocol or for the safety function.

All devices are assumed to support the UCDC-0.

The standard 2-based devices supporting the bidirectional communication may support a lower UCDC level of two UCDC levels (Requirement 4).

Between the standard 2-based devices supporting different UCDC levels, data corresponding to a highest UCDC level supported by both devices may be used (Requirement 5).

A connection compatibility check process in the case where the WLAN communication technology is used as the advanced communication (AC) may, for example, be performed as follows.

### Scenario 1

Step 0: The dispenser 100 is prepared with an access point (AP), i.e. a wireless router.

The access point may beacon a signal so that the hydrogen electric vehicle 200 may access the fueling station and a vehicle supply equipment (VSE).

Step 1: The hydrogen electric vehicle 200 approaching the dispenser 100 scans and finds the dispenser 100. Afterwards, the hydrogen electric vehicle 200 and the dispenser 100 may establish a bidirectional WLAN link.

### Scenario 2

The dispenser 100 does not support the bidirectional WLAN but supports the unidirectional IrDA (Type 2).

The hydrogen electric vehicle 200, which is a device of Type 4, approaching the dispenser 100 scans the dispenser 100 but cannot detect the dispenser 100.

After the nozzle and receptacle are plugged, a communication is initiated via the unidirectional IrDA (Type 2).

### Scenario 3

The dispenser 100 may support the bidirectional WLAN and the unidirectional IrDA (Type 4).

The hydrogen electric vehicle 200, which is a device of Type 2, parks in front of the dispenser 100.

The dispenser 100 does not detect a WLAN client.

After the nozzle and receptacle are plugged, a communication is initiated via the unidirectional IrDA (Type 2).

When the UCDC level is 1 or higher, the data that may be shared through the communication is as follows:

### General Communication Data Transmitted by Dispenser 100 to Hydrogen Electric Vehicle 200

- Fuel delivery pressure
- Fuel delivery temperature
- Delivery flow rate
- Maximum fuel delivery pressure
- Minimum fuel delivery temperature
- Maximum fuel delivery temperature
- Maximum delivery flow rate

### General Communication Data Transmitted by Hydrogen Electric Vehicle 200 to Dispenser 100

- Receptacle type (RT)
- Tank volume (TV)
- Measured pressure (MP)
- Measured temperature (MT)
- Working pressure
- Maximum working pressure
- Maximum working temperature

As mentioned above, in the use case (UC5) of parameter exchange operation S430 shown in FIG. 3, the hydrogen electric vehicle 200 and the dispenser 100 may exchange parameters for the safe and efficient fueling. The exchanged parameters may include fueling method parameters, physical characteristics/limitations, fueling goals, and ambient parameters.

### Fueling Parameters Transmitted by Dispenser 100 to Hydrogen Electric Vehicle 200

- (Physical parameters) Maximum fuel delivery pressure, Maximum fuel delivery temperature, Minimum fuel delivery temperature, Maximum fuel delivery flow fate, and so on
- (Protocol specific) Fueling protocol category
- (Auxiliary parameters) Ambient temperature
- (Fueling target parameters) Target SOC, Target duration (expected), Target final tank pressure, Target APR, Target final tank temperature
- (Monitoring parameters) Current fuel delivery temperature

### Fueling Parameters Transmitted by Hydrogen Electric Vehicle 200 to Dispenser 100

- (Physical parameters) Receptacle type (e.g., H35 or H70), Maximum allowed tank (CHSS) pressure, Maximum allowed tank (CHSS) temperature, Maximum allowed flow, FCEV Tank (CHSS) volume
- (Monitoring parameters) Current tank (CHSS) temperature, Current tank (CHSS) pressure

Generally, the unidirectional/bidirectional communication makes it difficult to ensure that a message has been properly delivered or received. In addition, the transmitting device does not know whether the information contained in the message transmitted through the unidirectional/bidirectional communication has been used by the counterpart device. Further, the unidirectional communication hardly provides the security function.

Nevertheless, however, the dispenser 100 needs to notify the hydrogen electric vehicle 200 of an error and an emergency event, as well as inform a start and an end of the hydrogen fueling process.

Considering these aspects, the present disclosure enables to identify an interoperable protocol between the dispenser 100 and the hydrogen electric vehicle 200 in advance and utilize the interoperable protocol information to establish and provide the safety, the security, and the control function of the hydrogen fueling process that are balanced with the compatible protocol.

Secure communication may be required in some mission critical system. An exemplary embodiment of the present disclosure may provide an appropriate security function when transmitting data while preventing an external exposure of unnecessary data according to the level of the compatible protocol.

An exemplary embodiment of the present disclosure may enhance the safety and improve the handling of emergency events and errors efficiently.

An exemplary embodiment of the present disclosure may allow to secure the compatibility and bidirectional communication capability of communication protocols and enhance the safety and efficiency of the hydrogen fueling/delivery process. The bidirectional communication may further enhance the safety and efficiency by providing a protocol for requesting information and responding to a request.

An exemplary embodiment of the present disclosure may provide a safe and efficient hydrogen fueling/delivery process that enables fueling status monitoring, safety measurement/control through a cooperation, communication security, and user experience, and a communication protocol supporting the process. The communication security may ensure the safety of a mission critical system.

An exemplary embodiment of the present disclosure may provide a framework for providing the communication interoperability between the hydrogen electric vehicle (FCEV) 200 and the dispenser 100, and for dividing a problem existing in the overall FECV hydrogen fueling process into a plurality of sub-problems to resolve the problem by dividing and conquering the problem.

An exemplary embodiment of the present disclosure may ensure a superior compatibility and stability through a layered approach to common elements related to physical, delivery, and encoding aspects.

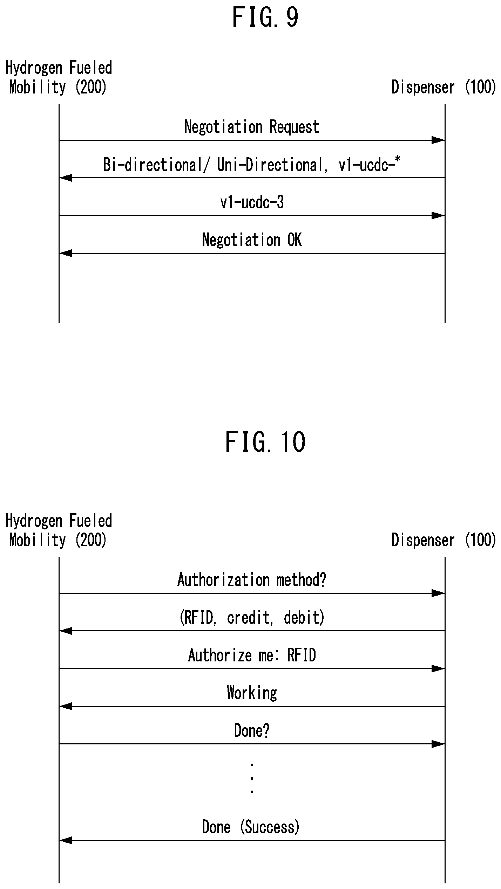

FIGS. 8 and 9 are sequence diagrams illustrating the communication protocol negotiation process carried out while performing the hydrogen fueling communication method according to exemplary embodiments of the present disclosure.

Referring to FIG. 8, the hydrogen electric vehicle 200 may transmit compatible communication protocol information, hydrogen fueling protocol information, and the UCDC level to the dispenser 100. At this time, the hydrogen electric vehicle 200 may transmit the compatible communication protocol information and the UCDC level information together with priority information.

The dispenser 100 may select and/or determine the compatible protocol and the UCDC level based on the information received from the hydrogen electric vehicle 200 and respond to the hydrogen electric vehicle 200. In this process, the dispenser 100 may determine whether a fallback is necessary and finally determine the protocol, taking into account the priority of the communication types supported by the hydrogen electric vehicle 200.

Referring to FIG. 9, the hydrogen electric vehicle 200 may transmit a negotiation request message requesting the protocol negotiation to the dispenser 100. At this time, the dispenser 100 may provide the hydrogen electric vehicle 200 with information of the protocols supported by the dispenser 100. The hydrogen electric vehicle 200 may select a most suitable protocol among the protocols of which information were received from the dispenser 100 and notify a selected protocol to the dispenser 100. The protocol negotiation may be performed between the two entities through such a process.

Examples of protocols and the UCDC levels that may be considered in FIGS. 8 and 9 may include SAE-J2601-2020-no_com, SAE-J2601-2020-TLookup, SAE-J2601-2020-MCForm, ISO 19885-3-2023-UCDC-1, ISO 19885-3-2023-UCDC-2, and ISO 19885-3-2023-UCDC-3.

FIG. 10 is a sequence diagram illustrating the authorization process carried out while performing the hydrogen fueling communication method according to an exemplary embodiment of the present disclosure. The process shown in FIG. 10 may be used to check whether the hydrogen electric vehicle 200 is authorized for fueling.

Referring to FIG. 10, the hydrogen electric vehicle 200 may request an authorization method to the dispenser 100.

The dispenser 100 may respond to the hydrogen electric vehicle 200 by providing communication means or payment means for the authorization to the hydrogen electric vehicle 200.

The hydrogen electric vehicle 200 may select one of the authorization means (e.g., RFID) to request the authorization.

Subsequently, the authorization may completed through communications between the two parties, and the authorization process may be terminated after confirmations of the two parties.

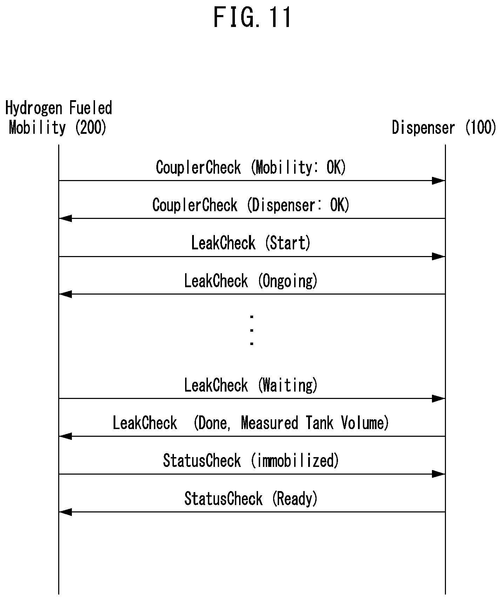

FIG. 11 is a sequence diagram illustrating the safety check-in process carried out while performing the hydrogen fueling communication method according to an exemplary embodiment of the present disclosure.

That is, FIG. 11 illustrates a safety check-up process before the fueling begins.

It is checked whether the engagement of the nozzle and the receptacle is locked.

It is checked whether there is a leakage.

Afterwards, a last-minute status is checked.

The safety check-in process shown in FIG. 11 may also be performed by a communication sequence initiated by the hydrogen electric vehicle 200.

During the process, the dispenser 100 may report information such as coupler lock status, leakage check status, and estimated FCEV tank volume to the hydrogen electric vehicle 200.

Meanwhile, the hydrogen electric vehicle 200 may report information such as immobilization status to the dispenser 100.

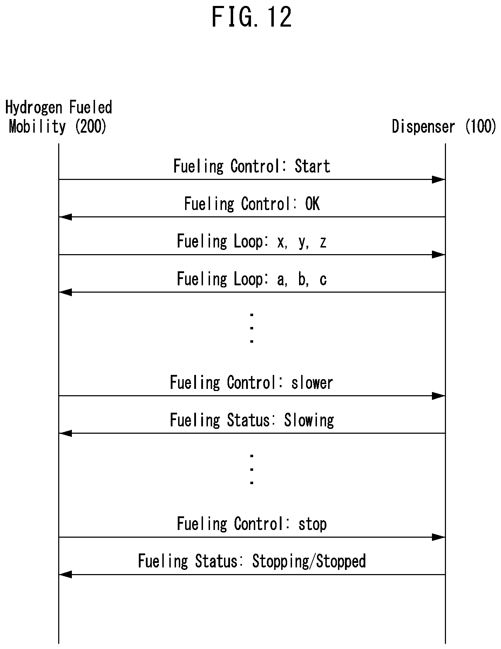

FIG. 12 is a sequence diagram illustrating the fueling control and monitoring process carried out while performing the hydrogen fueling communication method according to an exemplary embodiment of the present disclosure.

FIG. 12 relates to a periodic or continuous process of information exchange for the fueling status.

The hydrogen electric vehicle 200 may share information such as a present temperature and a present pressure with the dispenser 100. The dispenser 100 may share information such as an injecting force and a fueling plan ahead with the hydrogen electric vehicle 200. In addition, the dispenser 100 may share situation information such as the starting or the stopping of the fueling, and ramping up or ramping down with the hydrogen electric vehicle 200.

Occasionally, the hydrogen electric vehicle 200 may provide the dispenser 100 with control information for safety such as start, stop, slow down, speed up, target pressure, and pause of the fueling.

Information that may be reported by the dispenser 100 to the hydrogen electric vehicle 200 in this process may include following information:
(Status 1) Not Ready, Ready, Fueling, Paused, Terminated, Emergency stopped, Current ambient temperature, Current PRR (pressure ramp rate Mbar/min), Delivery fuel flow rate (g/sec), Current fuel delivery temperature (same as pre-cooling temperature), Current fuel delivery pressure
(Status 2) Using top-off (true/false), Using cold dispenser (true/false), Using Fallback taken (true/false), Fueling stopped reason (normal, error code), Current fueled hydrogen amount (g)
(Target parameter update) Target final tank pressure, Target final tank temperature, Target fueling APR, Target SOC, Current SOC, Estimated remaining duration

Information that may be reported by the hydrogen electric vehicle 200 to the dispenser 100 in this process may include following information:
(Control) Action: Start, Pause, Resume, Terminate
(Reporting) Current tank temperature, Current tank pressure

The hydrogen fueling control and monitoring process shown in FIG. 12 may also be performed by a communication sequence initiated by the hydrogen electric vehicle 200.

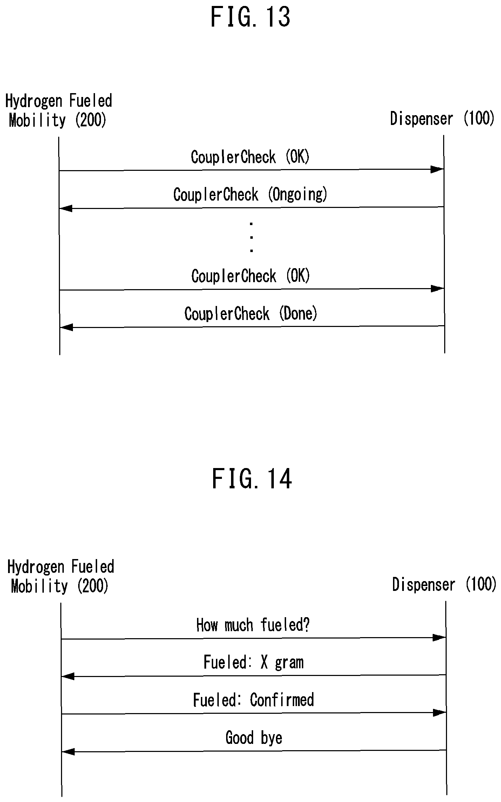

FIG. 13 is a sequence diagram illustrating the safety check-out process carried out while performing the hydrogen fueling communication method according to an exemplary embodiment of the present disclosure.

Referring to FIG. 13, information such as whether the coupler is iced or not-stuck, whether the nozzle is closed, and whether the coupler is unlocked may be checked and check results may be shared with the dispenser 100.

The hydrogen electric vehicle 200 may periodically notify that the coupler check status is in good condition. If the fueling has been completed, the dispenser 100 may terminate the process and proceed with the termination process.

Information that may be exchanged between the hydrogen electric vehicle 200 and the dispenser 100 in this process may include a coupler unlock status and coupler problems such as icing and being stuck. When the nozzle cannot be separated from the receptacle, such a status needs to be reported immediately as it may hinder subsequent processes.

FIG. 14 is a sequence diagram illustrating the termination process carried out while performing the hydrogen fueling communication method according to an exemplary embodiment of the present disclosure.

Referring to FIG. 14, the hydrogen electric vehicle 200 may request information on how much hydrogen has been fueled from the dispenser 100. The dispenser 100 may respond to the hydrogen electric vehicle 200 with the amount of hydrogen fueled. Afterwards, the termination process may be completed after a confirmation of the hydrogen electric vehicle 200.

The dispenser 100 may provide the hydrogen electric vehicle 200 with the following information.
- Final SOC, Final average fueling rate (APRR), Final measured tank pressure, actual fueling duration, Actual fueled hydrogen amount

The hydrogen electric vehicle 200 may provide the dispenser 100 with the following information.
- Current tank temperature, Current tank pressure

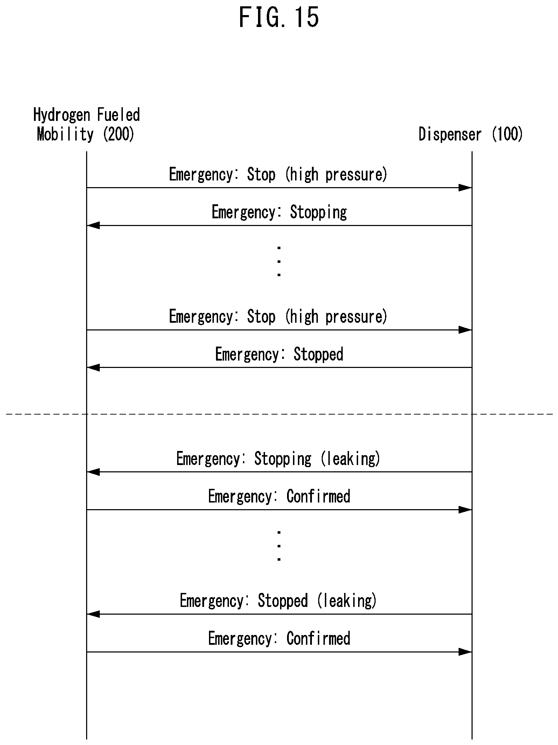

FIG. 15 is a sequence diagram illustrating the emergency handling process carried out while performing the hydrogen fueling communication method according to an exemplary embodiment of the present disclosure.

Referring to FIG. 15, the hydrogen electric vehicle 200 may request an action to the dispenser 100 at any time regarding a safety-related event.

For example, the hydrogen electric vehicle 200 may request a stop/halt, a pause, or slowing-down of the fueling because of a high pressure, and the dispenser 100 is required to respond to the request.

Although the hydrogen electric vehicle 200 initiates a first communication sequence in the embodiments described above, it will be apparent to those skilled in the art that, in another embodiment of the present disclosure, either the hydrogen electric vehicle 200 or the dispenser 100 may initiate the first communication sequence.

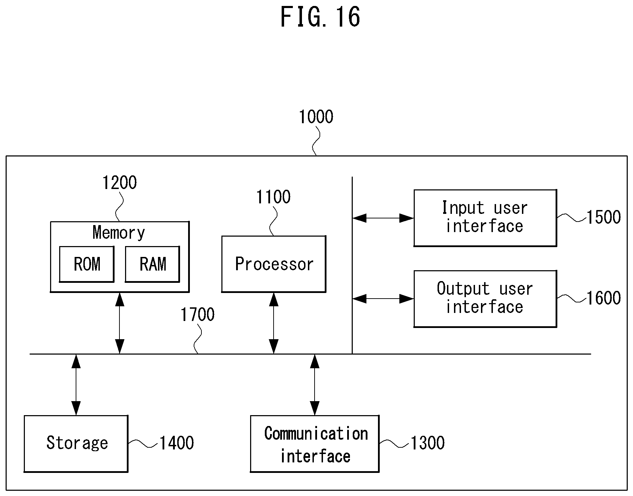

FIG. 16 is a block diagram illustrating a generalized configuration of a computing system that may be mounted on the dispenser 100 and/or the FCEV as a hydrogen fueling communication apparatus according to an exemplary embodiment of the present disclosure.

Although not shown in FIGS. 1-15, a processor and a memory may be electronically connected to each component, and the operation of each component may be controlled or managed by the processor.

At least some process of the hydrogen fueling communication method for fueling the FCEV according to an exemplary embodiment of the present disclosure may be executed by the computing system 1000 of FIG. 16.

Referring to FIG. 16, the computing system 1000 according to an embodiment of the present disclosure may include a processor 1100, a memory 1200, a communication interface 1300, a storage device 1400, an input interface 1500, and an output interface 1600, and a system bus 1700.

The computing system 1000 according to an embodiment of the present disclosure may include at least one processor 1100 and the memory 1200 storing program instructions instructing the at least one processor 1100 to perform at least one process step. At least some of the operations or process steps of the method according to an embodiment of the present disclosure may be performed by the at least one processor 1100 loading and executing the program instructions from the memory 1200.

The processor 1100, which executes the program instructions or commands stored in the memory 1200, may include a central processing unit (CPU) or a graphics processing unit (GPU) or may be implemented by another kind of dedicated processor suitable for performing the method of the present disclosure.

Each of the memory 1200 and the storage device 1400 may include at least one of a volatile storage medium and a non-volatile storage medium. For example, the memory 1200 may be comprised of at least one of a read only memory (ROM) and a random access memory (RAM).

Additionally, the computing system 1000 may include the communication interface 1300 that performs communications through a wireless communication network.

Additionally, the computing system 1000 may further include the storage device 1400, the input interface 1500, and the output interface 1600.

The components of the computing system 1000 may be connected to each other by the system bus 1700 to communicate with each other.

The computing system 1000 according to an exemplary embodiment of the present disclosure may be any data processing device capable of communications through a network such as a desktop computer, a laptop computer, a notebook PC, a smartphone, a tablet PC, a mobile phone, a smart watch, smart glasses, an e-book reader, a portable multimedia player (PMP), a portable game console, a navigation device, a digital camera, a digital multimedia broadcasting (DMB) player, a digital audio recorder, a digital audio player, a digital video recorder, a digital video player, and a personal digital assistant (PDA).

A hydrogen fueling communication apparatus according to an exemplary embodiment of the present disclosure is mounted on the hydrogen fueled mobility or the dispenser 100 to perform communications between the hydrogen fueled mobility and the dispenser 100 and may include the processor 1100 receiving and executing at least one program instruction from the memory 1200.

By executing the at least program instruction, the processor 1100 may identify a communication protocol supported by the hydrogen fueled mobility and a communication protocol supported by the dispenser 100 based on a communication sequence performed by the hydrogen fueled mobility and information delivered by the communication sequence, and determine a communication protocol to be performed between the hydrogen fueled mobility and the dispenser 100 based on the communication protocol supported by the hydrogen fueled mobility and the communication protocol supported by the dispenser 100.

By executing the at least program instruction, the processor 1100 may determine the hydrogen fueling protocol for supplying the hydrogen fluid fuel to the hydrogen fueled mobility based on information delivered by the communication sequence and supply the hydrogen fluid fuel to the hydrogen fueled mobility based on the hydrogen fueling protocol.

By executing the at least program instruction, the processor 1100 may determine a communication protocol candidate based on the communication protocol supported by the hydrogen fueled mobility and the communication protocol supported by the dispenser 100 and determine the communication protocol from the communication protocol candidate based on determination on whether the communication protocol candidate corresponds to the hydrogen fueling protocol for supplying the hydrogen fluid fuel to the hydrogen fueled mobility.

By executing the at least program instruction, the processor 1100 may determine the communication protocol based on at least one of: the interoperability between the dispenser 100 and the hydrogen fueled mobility and/or the UCDC backward compatibility.

By executing the at least program instruction, the processor 1100 may detect the coupling of the receptacle of the hydrogen fueled mobility and the nozzle of the dispenser 100 (determine the receptacle and the nozzle is coupled) and receive the information delivered by the communication sequence from the hydrogen fueled mobility in a state where coupling is detected (the receptacle and the nozzle is coupled).

By executing the at least program instruction, the processor 1100 may perform the pairing process to identify whether the hydrogen fueled mobility indicated by the information delivered by the communication sequence is the same entity as the hydrogen fueled mobility coupled to the dispenser 100.

By executing the at least program instruction, the processor 1100 may detect the coupling of the receptacle of the hydrogen fueled mobility and the nozzle of the dispenser 100 (determine the receptacle and the nozzle is coupled), stand by to receive the communication sequence from the hydrogen fueled mobility for a certain time interval in a state that the coupling is being detected (the receptacle and the nozzle is coupled), and identify the communication protocol that the hydrogen fueled mobility can support based on a determination on whether the communication sequence from the hydrogen fueled mobility is received within the certain time interval.

By executing the at least program instruction, the processor 1100 may determine a hydrogen fueling parameter based on the determined hydrogen fueling protocol and supply the hydrogen fluid fuel to the hydrogen fueled mobility based on the hydrogen fueling protocol and the hydrogen fueling parameter.

By executing the at least program instruction, the processor 1100 may initiate the communication protocol negotiation in case where it is determined that bidirectional communication is supported between the hydrogen fueled mobility and the dispenser 100 based on the information delivered by the communication sequence, and may determine the communication protocol through the communication protocol negotiation.

By executing the at least program instruction, the processor 1100 may initiate the hydrogen fueling protocol negotiation between the hydrogen fueled mobility and the dispenser 100 and may determine the hydrogen fueling protocol through the hydrogen fueling protocol negotiation.

By executing the at least program instruction, the processor 1100 may initiate the hydrogen fueling parameter negotiation between the hydrogen fueled mobility and the dispenser 100 based on the hydrogen fueling protocol and may determine the hydrogen fueling parameter through the hydrogen fueling parameter negotiation.

The device and method according to exemplary embodiments of the present disclosure can be implemented by computer-readable program codes or instructions stored on a computer-readable intangible recording medium. The computer-readable recording medium includes all types of recording device storing data which can be read by a computer system. The computer-readable recording medium may be distributed over computer systems connected through a network so that the computer-readable program or codes may be stored and executed in a distributed manner.

The computer-readable recording medium may include a hardware device specially configured to store and execute program instructions, such as a ROM, RAM, and flash memory. The program instructions may include not only machine language codes generated by a compiler, but also high-level language codes executable by a computer using an interpreter or the like.

Some aspects of the present disclosure described above in the context of the device may indicate corresponding descriptions of the method according to the present disclosure, and the blocks or devices may correspond to operations of the method or features of the operations. Similarly, some aspects described in the context of the method may be expressed by features of blocks, items, or devices corresponding thereto. Some or all of the operations of the method may be performed by use of a hardware device such as a microprocessor, a programmable computer, or electronic circuits, for example. In some exemplary embodiments, one or more of the most important operations of the method may be performed by such a device.

In some exemplary embodiments, a programmable logic device such as a field-programmable gate array may be used to perform some or all of functions of the methods described herein. In some exemplary embodiments, the field-programmable gate array may be operated with a microprocessor to perform one of the methods described herein. In general, the methods are preferably performed by a certain hardware device.

The description of the disclosure is merely exemplary in nature and, thus, variations that do not depart from the substance of the disclosure are intended to be within the scope of the disclosure. Such variations are not to be regarded as a departure from the spirit and scope of the disclosure. Thus, it will be understood by those of ordinary skill in the art that various changes in form and details may be made without departing from the spirit and scope as defined by the following claims.

## Claims

1. A hydrogen fueling communication method performed by a dispenser supplying hydrogen fluid fuel to a hydrogen fueled mobility, comprising:
identifying a communication protocol supported by the hydrogen fueled mobility and a communication protocol supported by the dispenser based on a communication sequence performed by the hydrogen fueled mobility and information delivered by the communication sequence; and
determining a communication protocol to be performed between the hydrogen fueled mobility and the dispenser based on the communication protocol supported by the hydrogen fueled mobility and the communication protocol supported by the dispenser.

2. The hydrogen fueling communication method of claim 1, wherein the information delivered by the communication sequence comprises use classification of communicated data (UCDC) that may be supported by the hydrogen fueled mobility.

3. The hydrogen fueling communication method of claim 1, wherein the communication protocol comprises at least one detailed subordinate communication protocol,
wherein the at least one detailed subordinate communication protocol corresponds to one of: bidirectional communication, unidirectional communication, or no communication.

4. The hydrogen fueling communication method of claim 1, wherein the information delivered by the communication sequence comprises at least one of: at least one communication protocol that the hydrogen fueled mobility can support or at least one hydrogen fueling protocol for supplying the hydrogen fluid fuel to the hydrogen fueled mobility that the hydrogen fueled mobility can support.

5. The hydrogen fueling communication method of claim 1, wherein determining the communication protocol comprises:
determining a communication protocol candidate based on the communication protocol supported by the hydrogen fueled mobility and the communication protocol supported by the dispenser; and
determining the communication protocol from the communication protocol candidate based on whether the communication protocol candidate corresponds to the hydrogen fueling protocol for supplying the hydrogen fluid fuel to the hydrogen fueled mobility.

6. The hydrogen fueling communication method of claim 1, wherein, in determining the communication protocol, the communication protocol is determined based on at least one of: an interoperability between the dispenser and the hydrogen fueled mobility or a backward compatibility.

7. The hydrogen fueling communication method of claim 1, further comprising:
determining whether a receptacle of the hydrogen fueled mobility and a nozzle of the dispenser is coupled; and
receiving the information delivered by the communication sequence from the hydrogen fueled mobility in a state where the receptacle and the nozzle is coupled.

8. The hydrogen fueling communication method of claim 7, further comprising:
performing a pairing by identifying whether a hydrogen fueled mobility indicated by the information delivered by the communication sequence is a same entity as a hydrogen fueled mobility coupled to the dispenser.

9. The hydrogen fueling communication method of claim 1, further comprising:
determining whether a receptacle of the hydrogen fueled mobility and a nozzle of the dispenser is coupled;
standing by to receive the communication sequence from the hydrogen fueled mobility for a predetermined time interval in a state where the receptacle and the nozzle is coupled; and
identifying a communication protocol that the hydrogen fueled mobility can support based on whether the communication sequence from the hydrogen fueled mobility is received within the predetermined time interval.

10. The hydrogen fueling communication method of claim 1, wherein determining the communication protocol comprises:
initiating a communication protocol negotiation based on a determination that a bidirectional communication is supported between the hydrogen fueled mobility and the dispenser based on the information delivered by the communication sequence; and
determining the communication protocol through the communication protocol negotiation.

11. A hydrogen fueling communication apparatus mounted on a dispenser supplying hydrogen fluid fuel to a hydrogen fueled mobility, comprising:
a memory storing at least one program instruction; and
a processor, by executing the at least one program instruction stored in the memory, configured to:
identify a communication protocol supported by the hydrogen fueled mobility and a communication protocol supported by the dispenser based on a communication sequence performed by the hydrogen fueled mobility and information delivered by the communication sequence; and
determine a communication protocol to be performed between the hydrogen fueled mobility and the dispenser based on the communication protocol supported by the hydrogen fueled mobility and the communication protocol supported by the dispenser.

12. The hydrogen fueling communication apparatus of claim 11, wherein the information delivered by the communication sequence comprises use classification of communicated data (UCDC) that may be supported by the hydrogen fueled mobility.

13. The hydrogen fueling communication apparatus of claim 11, wherein the communication protocol comprises at least one detailed subordinate communication protocol,
wherein the at least one detailed subordinate communication protocol corresponds to one of: bidirectional communication, unidirectional communication, or no communication.

14. The hydrogen fueling communication apparatus of claim 11, wherein the information delivered by the communication sequence comprises at least one of: at least one communication protocol that the hydrogen fueled mobility can support or at least one hydrogen fueling protocol for supplying the hydrogen fluid fuel to the hydrogen fueled mobility that the hydrogen fueled mobility can support.

15. The hydrogen fueling communication apparatus of claim 11, wherein, for determining the communication protocol, the processor is further configured to:
determine a communication protocol candidate based on the communication protocol supported by the hydrogen fueled mobility and the communication protocol supported by the dispenser; and
determine the communication protocol from the communication protocol candidate based on whether the communication protocol candidate corresponds to the hydrogen fueling protocol for supplying the hydrogen fluid fuel to the hydrogen fueled mobility.

16. The hydrogen fueling communication apparatus of claim 11, wherein the processor is further configured to determine the communication protocol based on at least one of: an interoperability between the dispenser and the hydrogen fueled mobility or a backward compatibility.

17. The hydrogen fueling communication apparatus of claim 11, by executing the at least one program instruction stored in the memory, the processor is further configured to:
determine whether a receptacle of the hydrogen fueled mobility and a nozzle of the dispenser is coupled; and
receive the information delivered by the communication sequence from the hydrogen fueled mobility in a state where the receptacle and the nozzle is coupled.

18. The hydrogen fueling communication apparatus of claim 17, by executing the at least one program instruction stored in the memory, the processor is further configured to:
perform a pairing by identifying whether a hydrogen fueled mobility indicated by the information delivered by the communication sequence is a same entity as a hydrogen fueled mobility coupled to the dispenser.

19. The hydrogen fueling communication apparatus of claim 1, by executing the at least one program instruction stored in the memory, the processor is further configured to:
determine whether a receptacle of the hydrogen fueled mobility and a nozzle of the dispenser is coupled;
stand by to receive the communication sequence from the hydrogen fueled mobility for a predetermined time interval in a state where the receptacle and the nozzle is coupled; and
identify a communication protocol that the hydrogen fueled mobility can support based on whether the communication sequence from the hydrogen fueled mobility is received within the predetermined time interval.

20. The hydrogen fueling communication apparatus of claim 11, wherein, for determining the communication protocol, the processor is further configured to:
initiate a communication protocol negotiation based on a determination that a bidirectional communication is supported between the hydrogen fueled mobility and the dispenser based on the information delivered by the communication sequence; and
determine the communication protocol through the communication protocol negotiation.
